# FASCICULE DE BREVET EUROPEEN

(11) **EP 4 166 454 B1**
(45) Date de publication et mention de la délivrance du brevet: **17.07.2024**
(21) Numéro de dépôt: 22201438.3
(22) Date de dépôt: 13.10.2022
(51) Int. Cl.: B64D 27/40

(54) **ASSEMBLAGE D'UN MAT AVEC UN MOTEUR D'UN AÉRONEF**
MASTANORDNUNG MIT EINEM FLUGZEUGMOTOR
AIRCRAFT ENGINE MAST ASSEMBLY

(30) Priorité: 14.10.2021 FR 2110919
(43) Date de publication de la demande: 19.04.2023
(73) Titulaire: AIRBUS OPERATIONS, 31060 Toulouse Cedex 9 (FR)
(72) Inventeur: RUMIEL, Franck, 31060 Toulouse (FR); ROBIGLIO, Thomas, 31060 Toulouse (FR); MESSINA, Paolo, 31060 Toulouse (FR)
(74) Mandataire: Cabinet Le Guen Maillet

(56) Documents cités:
- FR-A1- 3 059 982
- US-A1- 2011 114 786
- US-A1- 2021 070 459

## Description

### DOMAINE TECHNIQUE

La présente invention concerne un assemblage d'un mât avec un moteur d'aéronef, ainsi qu'un aéronef comportant un tel assemblage.

### ÉTAT DE LA TECHNIQUE ANTÉRIEURE

De manière classique, un aéronef comprend au moins un moteur, par exemple un turboréacteur, fixé sous chacune de ses ailes au moyen d'un mât constitué d'une structure primaire sous la forme d'un caisson rigide. Le mât est attaché de manière isostatique sous l'aile au moyen d'organes de fixation.

Le moteur est attaché sous le mât à l'aide d'attaches, en particulier une attache moteur avant et une attache moteur arrière.

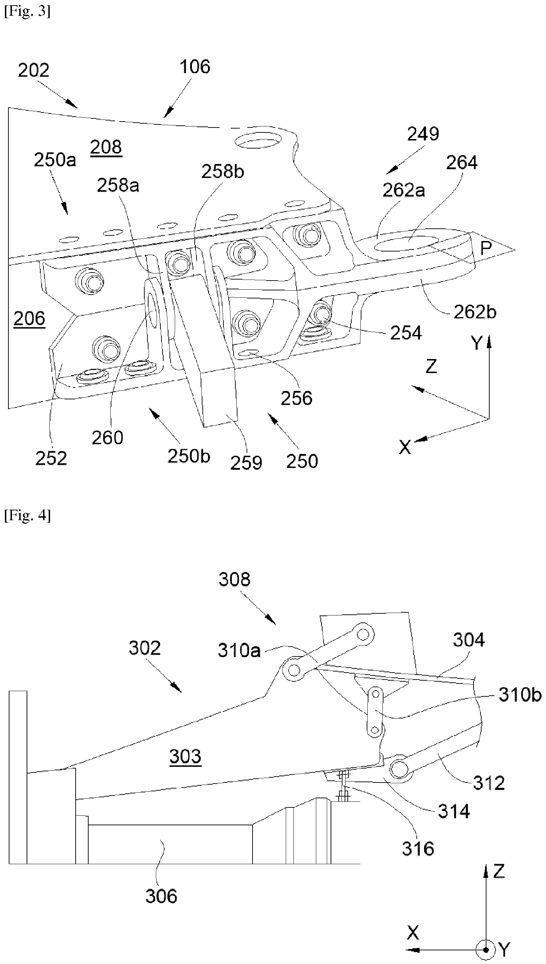

La Fig. 4 montre en vue de côté un mât 302 fixé sous la structure 304 d'une aile et qui soutient un moteur 306.

Le mât 302 comporte une structure primaire 303 présentant un plan médian longitudinal qui sépare la structure primaire 303 en deux parties bâbord et tribord.

La structure primaire 303 est fixée à la structure 304 par des organes de fixation 308 qui comportent ici deux paires de bielles 310a-b. Les bielles 310a-b de chaque paire de bielles 310a-b sont réparties de part et d'autre du plan médian.

Le mât 302 comporte également une ferrure inférieure 314 fixée en partie basse et à l'arrière de la structure primaire 303 globalement au niveau du plan médian.

Les organes de fixation 308 comportent également une bielle arrière 312 qui est fixée par un point de liaison à la ferrure inférieure 314 et par un point de liaison à la structure 304. La bielle arrière 312 s'étend globalement dans le plan médian et s'étend vers l'arrière à partir de la ferrure inférieure 314.

La structure primaire 303 est fixée au moteur 306 par une attache moteur avant qui fixe une partie avant de la structure primaire 303 au moteur 306 et une attache moteur arrière 316 qui fixe une partie arrière de la structure primaire 303 à une partie arrière du moteur 306.

L'attache moteur arrière 316 prend généralement la forme d'une bielle qui est fixée par un point de liaison à la structure primaire 303 et par deux points de liaison au moteur 306.

Bien qu'un tel arrangement donne satisfaction, la mise en oeuvre de cette solution nécessite l'emploi de nombreux composants et il existe donc un besoin de trouver un arrangement différent.

Les documents US-A-2011/114786, FR-A-3 059 982 et US-A-2021/070459 divulguent des assemblages entre un mât et un moteur d'aéronef de l'état de la technique.

### EXPOSÉ DE L'INVENTION

Un objet de la présente invention est de proposer un assemblage d'un mât avec un moteur d'un aéronef comportant un nombre réduit de composants.

À cet effet, est proposé un assemblage d'un mât et d'un moteur d'un aéronef avec une attache moteur arrière, le moteur présentant une direction longitudinale, le mât présentant un plan médian et comportant un longeron inférieur et deux panneaux latéraux disposés de part et d'autre du plan médian, l'attache moteur arrière comportant une semelle formée par deux ferrures disposées de part et d'autre du plan médian, où chaque ferrure comporte un sabot fixé au longeron inférieur et où l'assemblage comporte en outre une bielle inférieure,
ledit assemblage étant caractérisé en ce que chaque sabot est fixé à un des panneaux latéraux, deux branches transversales espacées parallèlement à la direction longitudinale, dont une branche transversale avant et une branche transversale arrière, solidaires du sabot, et s'étendant perpendiculairement à la direction longitudinale, en ce que la branche transversale avant, respectivement arrière d'une ferrure est en appui plan contre la branche transversale avant, respectivement arrière, de l'autre ferrure, où chaque branche transversale est percée d'un alésage, où tous les axes des alésages des branches transversales sont coaxiaux, où les deux branches transversales avant et les deux branches transversales arrière forment ainsi une chape femelle, et en ce que la bielle inférieure est montée articulée dans la chape femelle et sur le moteur.

Avec un tel assemblage, le nombre de composants est réduit.

Selon un mode de réalisation particulier, la branche transversale avant, respectivement arrière, d'une ferrure est décalée vers l'avant selon l'axe longitudinal par rapport à la branche transversale avant, respectivement arrière, de l'autre ferrure.

Selon un autre mode de réalisation particulier, la branche transversale avant et la branche transversale arrière d'une ferrure sont disposées entre la branche transversale avant et la branche transversale arrière de l'autre ferrure.

Avantageusement, chaque sabot prend la forme d'un profilé en L dont un mur est fixé au longeron inférieur et dont l'autre mur est fixé au panneau latéral.

Avantageusement, l'assemblage comporte une aile avec une structure et une bielle arrière et la bielle arrière comporte une première extrémité montée articulée sur la structure de l'aile et une deuxième extrémité montée articulée sur l'attache moteur arrière.

Avantageusement, chaque ferrure comporte une palette solidaire du sabot et percée d'un alésage dont l'axe est perpendiculaire au plan médian, les deux palettes sont en contact plan l'une avec l'autre, leurs alésages sont coaxiaux et les deux palettes constituent ensemble une chape mâle qui s'insère dans une chape femelle arrangée au niveau de la deuxième extrémité de la bielle arrière et où les deux chapes sont montées articulées par l'intermédiaire d'un arbre. L'invention propose également un aéronef comportant au moins un assemblage selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une vue en perspective et de dessous d'un mât mis en oeuvre dans un assemblage selon un mode de réalisation de l'invention,
Fig. 3 est une vue en perspective et de dessous d'un mât mis en oeuvre dans un assemblage selon un autre mode de réalisation de l'invention, et
Fig. 4 déjà décrite, est une vue de côté d'un assemblage d'un mât, d'une aile et d'un moteur de l'état de la technique.

### EXPOSÉ DÉTAILLÉ DE MODES DE RÉALISATION

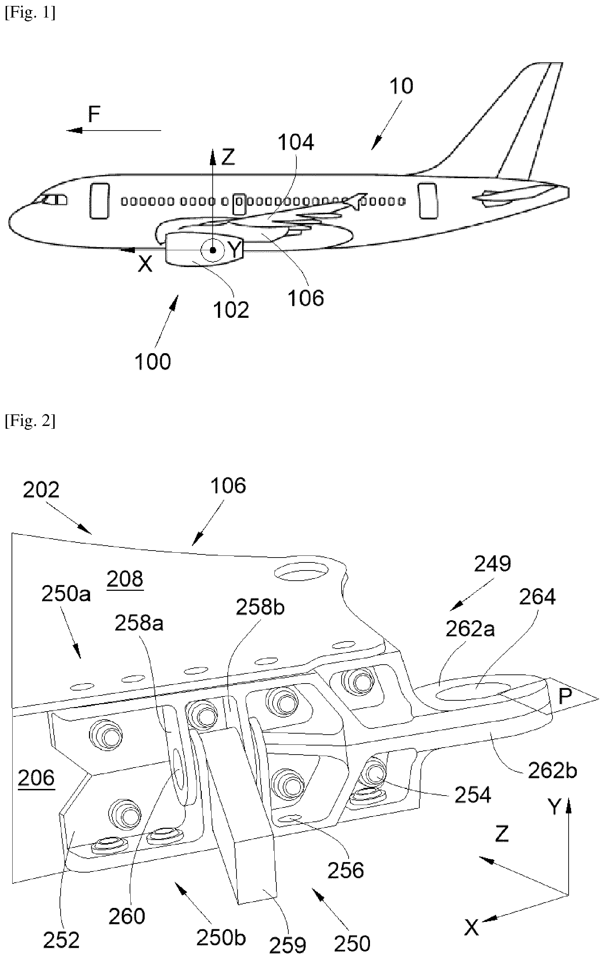

La Fig. 1 montre un aéronef 10 qui comporte un système de propulsion 100 avec un moteur 102, par exemple un turboréacteur, fixé sous une aile 104 de l'aéronef 10 par l'intermédiaire d'un mât 106.

Dans la description qui suit, les termes relatifs à une position sont pris en référence à un aéronef en position normale de vol, c'est-à-dire comme il est représenté sur la Fig. 1 et les positions « avant » et « arrière » sont prises par rapport à l'avant et l'arrière du moteur et par rapport à la direction d'avancement F de l'aéronef 10 lorsque le moteur 102 fonctionne.

Dans la description qui suit, et par convention, on appelle X la direction longitudinale du moteur qui est parallèle à l'axe longitudinal dudit moteur, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

Comme le montre la Fig. 2, le mât 106 comprend une structure rigide 202 formant un caisson et également appelée structure primaire. La structure primaire 202 comporte entre autres, un longeron supérieur, un longeron inférieur 206 et deux panneaux latéraux 208 disposés de part et d'autre du plan médian P et reliant les deux longerons 206, à savoir un panneau latéral tribord (non représenté) et un panneau latéral bâbord 208.

La structure primaire 202 est répartie de part et d'autre d'un plan médian longitudinal P parallèle au plan XZ.

Comme pour l'état de la technique, la structure primaire 202 est fixée à une structure de l'aile 104 par des organes de fixation qui peuvent prendre la même forme que ceux de l'état de la technique, à savoir deux paires de bielles, où les bielles de chaque paire sont réparties de part et d'autre du plan médian P et une bielle arrière s'étendant globalement dans le plan médian P et vers l'arrière, où les différentes bielles sont fixées entre le mât 106 et la structure de l'aile 104.

La structure primaire 202 est fixée au moteur 102 par différentes attaches moteur, dont en particulier une attache moteur arrière 250 qui se fixe entre le longeron inférieur 206 et le moteur 102, et plus particulièrement entre une partie arrière du longeron inférieur 206 et une partie arrière du moteur 102.

L'assemblage selon l'invention comporte donc le mât 106 et le moteur 102 qui sont fixés, entre autres, par l'attache moteur arrière 250.

L'attache moteur arrière 250 comporte une semelle 249 formée de deux ferrures 250a-b qui sont globalement symétriques par rapport au plan médian P et disposées de part et d'autre dudit plan médian P. Chaque ferrure 250a-b peut être réalisée par exemple par forgeage ou par dépôt de matière.

Chaque ferrure 250a-b comporte un sabot 252 qui est fixé à un des panneaux latéraux 208 et au longeron inférieur 206, et plus particulièrement ici à une partie arrière du longeron inférieur 206.

Dans le mode de réalisation de l'invention présenté sur la Fig. 2, le sabot 252 prend la forme d'un profilé en L dont un mur est fixé au longeron inférieur 206 et dont l'autre mur est fixé à un des panneaux latéraux 208. La fixation est assurée ici par des vis de serrage 254 qui se vissent respectivement dans le longeron inférieur 206 ou le panneau latéral 208 en traversant le sabot 252 à travers des alésages 256 prévus à cet effet.

Chaque ferrure 250a-b comporte également deux branches transversales 258a-b qui s'étendent perpendiculairement à la direction longitudinale X et donc ici perpendiculairement au plan médian P. Les deux branches transversales 258a-b sont parallèles entre elles et il y a ainsi une branche transversale avant 258a et une branche transversale arrière 258b qui est à l'arrière par rapport à la branche transversale avant 258a. Les deux branches transversales 258a-b sont solidaires du sabot 252.

Les branches transversales 258a-b des deux ferrures 250a-b sont décalées le long de la direction longitudinale X de manière à ce que la branche transversale avant 258a, respectivement arrière 258b, d'une ferrure 250a soit devant la branche transversale avant 258a, respectivement arrière 258b, de l'autre ferrure 250b. La branche transversale avant 258a, respectivement arrière 258b, d'une ferrure 250a est en appui plan contre la branche transversale avant 258a, respectivement arrière 258b, de l'autre ferrure 250b. Les branches transversales 258a-b des deux ferrures 250a-b se superposent.

Chaque branche transversale 258a-b est percée d'un alésage 260 et les axes de tous les alésages 260 sont coaxiaux et ici parallèles avec la direction longitudinale X.

Les deux branches transversales avant 258a et les deux branches transversales arrière 258b sont espacées parallèlement à la direction longitudinale X et forment ainsi une chape femelle dans laquelle est montée articulée une extrémité d'une bielle inférieure 259 qui est par ailleurs montée articulée sur le moteur 102, en particulier par deux points de liaison.

Le montage de la bielle inférieure 259 dans la chape femelle est réalisé par exemple à l'aide d'un arbre qui est monté dans les alésages 260 et sur lequel s'emmanche la bielle inférieure 259 et qui sert donc de points de liaison à la bielle inférieure 259. Pour améliorer le montage de l'arbre dans les alésages 260, une bague est montée dans les alésages 260 des branches transversales avant 258a et une bague est montée dans les alésages 260 des deux branches transversales arrière 258b.

Un tel assemblage est donc relativement simple et nécessite peu de pièces.

Dans le mode de réalisation de l'invention présenté à la Fig. 2, l'assemblage est également fixé à la structure de l'aile 104, entre autres, par l'intermédiaire de la bielle arrière qui s'étend globalement dans le plan médian P et vers l'arrière à partir du mât 106.

La bielle arrière comporte une première extrémité qui est montée articulée sur la structure de l'aile 104 et une deuxième extrémité qui est montée articulée sur l'attache moteur arrière 250.

Chaque ferrure 250a-b comporte une palette 262a-b qui est solidaire du sabot 252 et qui est percée d'un alésage 264 dont l'axe est perpendiculaire au plan médian P.

Les deux palettes 262a-b sont en contact plan l'une avec l'autre et leurs alésages 264 sont coaxiaux. Les deux palettes 262a-b constituent ensemble une chape mâle qui s'insère dans une chape femelle arrangée au niveau de la deuxième extrémité de la bielle arrière et où les deux chapes sont montées articulées par l'intermédiaire d'un arbre qui est monté dans les alésages 264 de la chape mâle et des alésages de la chape femelle prévus à cet effet.

La fixation des ferrures 250a-b sur le longeron inférieur 206 nécessite de percer des alésages 256 à travers chaque ferrure 250a-b et à travers le longeron inférieur 206 pour y fixer les vis de serrage 254. Du fait des disparités géométriques de fabrication des pièces, il arrive généralement que deux des quatre branches transversales 258a-b soient bien en appui mais qu'un écart reste entre les deux autres branches transversales 258a-b. Pour assurer que toutes les branches transversales 258a-b sont bien en appui plan l'une contre l'autre, il est alors possible de disposer une cale entre les deux branches transversales 258a-b qui sont distantes l'une de l'autre.

Un tel montage nécessite de réaliser une cale personnalisée pour chaque assemblage puisque l'écart va varier d'un assemblage à l'autre.

Un mode de réalisation particulier consiste à réaliser les alésages 256 dans chaque ferrure 250a-b et dans le longeron inférieur 206 et à mesurer la position et la dimension de chaque alésage 260 ainsi réalisées et d'enregistrer ces données dans une base de données.

Ce regroupement d'informations est réalisé pour un grand nombre de ferrures 250a-b et de longerons inférieurs 206.

À partir de cette base de données, une analyse de la base de données va permettre d'appairer les deux ferrures 250a-b et le longeron inférieur 206 qui correspondent les mieux dimensionnellement afin de minimiser les jeux pour qu'il ne soit pas nécessaire de fabriquer et de mettre en place une cale.

Ce procédé permet ainsi un gain de temps.

Dans le mode de réalisation de l'invention présenté à la Fig. 2, les branches transversales 258a-b d'une ferrure 250a sont arrangées en quinconce par rapport aux branches transversales 258a-b de l'autre ferrure 250b selon la direction longitudinale X. C'est-à-dire que la branche transversale avant 258a, respectivement arrière 258b, d'une ferrure 250a est décalée vers l'avant selon l'axe longitudinal X par rapport à la branche transversale avant 258a, respectivement arrière 258b, de l'autre ferrure 250b.

Dans le mode de réalisation de l'invention présenté à la Fig. 3, la branche transversale avant 258a et la branche transversale arrière 258b d'une ferrure 250a sont disposées entre la branche transversale avant 258a et la branche transversale arrière 258b de l'autre ferrure 250b. Ce mode de réalisation est une alternative de fabrication du mode décrit ci-dessus.

Dans le mode de réalisation de l'invention décrit sur les Figs. 2 et 3, le mât 106 présente un plan médian P et le longeron inférieur 206 a une section transversale en U ouverte vers le haut, avec un bord gauche situé d'un côté du plan médian P et un bord droit situé de l'autre côté du plan médian P. Les deux panneaux latéraux 208 sont disposés de part et d'autre du plan médian P, avec un panneau latéral gauche 208 fixé au bord gauche du longeron inférieur 206 et un panneau latéral droit 208 fixé au bord droit du longeron inférieur 206. Chaque panneau latéral 208 s'étend vers le bas au-delà du bord du longeron inférieur 206 sur lequel il est fixé de sorte à créer un espace entre le longeron inférieur 206 et les deux panneaux latéraux 208. La semelle 249 est arrangée dans cet espace. Ainsi, pour chaque ferrure 250a-b, le sabot 252 de ladite ferrure 250a-b est fixé, d'une part, au longeron inférieur 206 et, d'autre part, à l'un des panneaux latéraux 208.

Dans un autre mode de réalisation, non représenté sur les figures, le mât 106 présente un plan médian P et le longeron inférieur présente une section transversale en U qui est, cette fois ouverte vers le bas, avec un bord gauche situé d'un côté du plan médian P, un bord droit situé de l'autre côté du plan médian P et une partie plane entre les deux bords. Les deux panneaux latéraux 208 sont disposés de part et d'autre du plan médian P, avec un panneau latéral gauche 208 fixé au bord gauche du longeron inférieur et un panneau latéral droit 208 fixé au bord droit du longeron inférieur. Cette fois, les panneaux latéraux ne s'étendent pas vers le bas au-delà du longeron inférieur mais le long des bords gauche et droit du longeron inférieur. Un espace est alors créé entre les bords gauche et droit du longeron inférieur et sous la partie plane du longeron inférieur. La semelle 249 est alors arrangée dans cet espace. Ainsi, pour chaque ferrure 250a-b, le sabot 252 de ladite ferrure 250a-b, qui peut prendre également la forme d'un profilé en L, est fixé, d'une part, à la partie plane du longeron inférieur et, d'autre part, à l'un des bords gauche ou droit du longeron inférieur et potentiellement au panneau latéral fixé de l'autre côté du bord correspondant.

## Revendications

1. Assemblage d'un mât (106) et d'un moteur (102) d'un aéronef (10) avec une attache moteur arrière (250), le moteur (102) présentant une direction longitudinale (X), le mât (106) présentant un plan médian (P) et comportant un longeron inférieur (206) et deux panneaux latéraux (208) disposés de part et d'autre du plan médian (P), l'attache moteur arrière (250) comportant une semelle (249) formée par deux ferrures (250a-b) disposées de part et d'autre du plan médian (P), où chaque ferrure (250a-b) comporte un sabot (252) fixé au longeron inférieur (206) et où l'assemblage comporte en outre une bielle inférieure (259), ledit assemblage étant **caractérisé en ce que** chaque sabot (252) est fixé à un des panneaux latéraux (208), **en ce que** chaque ferrure (250a-b) comporte deux branches transversales (258a-b) espacées parallèlement à la direction longitudinale (X), dont une branche transversale avant (258a) et une branche transversale arrière (258b), solidaires du sabot (252) et s'étendant perpendiculairement à la direction longitudinale (X), **en ce que** la branche transversale avant (258a), respectivement arrière (258b), d'une ferrure (250a) est en appui plan contre la branche transversale avant (258a), respectivement arrière (258b), de l'autre ferrure (250b), où chaque branche transversale (258a-b) est percée d'un alésage (260), où tous les axes des alésages (260) sont coaxiaux, où les deux branches transversales avant (258a) et les deux branches transversales arrière (258b) forment ainsi une chape femelle, et **en ce que** la bielle inférieure (259) est montée articulée dans la chape femelle et sur le moteur (102).

2. Assemblage selon la revendication 1, **caractérisé en ce que** la branche transversale avant (258a), respectivement arrière (258b), d'une ferrure (250a) est décalée vers l'avant selon l'axe longitudinal (X) par rapport à la branche transversale avant (258a), respectivement arrière (258b), de l'autre ferrure (250b).

3. Assemblage selon la revendication 1, **caractérisé en ce que** la branche transversale avant (258a) et la branche transversale arrière (258b) d'une ferrure (250a) sont disposées entre la branche transversale avant (258a) et la branche transversale arrière (258b) de l'autre ferrure (250b).

4. Assemblage selon l'une des revendications 1 à 3, **caractérisé en ce que** chaque sabot (252) prend la forme d'un profilé en L dont un mur est fixé au longeron inférieur (206) et dont l'autre mur est fixé au panneau latéral (208).

5. Assemblage selon l'une des revendications 1 à 4, **caractérisé en ce qu'**il comporte une aile (104) avec une structure et une bielle arrière et **en ce que** la bielle arrière comporte une première extrémité montée articulée sur la structure de l'aile (104) et une deuxième extrémité montée articulée sur l'attache moteur arrière (250).

6. Assemblage selon la revendication 5, **caractérisé en ce que** chaque ferrure (250a-b) comporte une palette (262a-b) solidaire du sabot (252) et percée d'un alésage (264) dont l'axe est perpendiculaire au plan médian (P), **en ce que** les deux palettes (262a-b) sont en contact plan l'une avec l'autre, **en ce que** leurs alésages (264) sont coaxiaux et **en ce que** les deux palettes (262a-b) constituent ensemble une chape mâle qui s'insère dans une chape femelle arrangée au niveau de la deuxième extrémité de la bielle arrière et où les deux chapes sont montées articulées par l'intermédiaire d'un arbre.

7. Aéronef (10) comportant au moins un assemblage selon l'une des revendications précédentes.

## Patentansprüche

1. Anordnung eines Masts (106) und eines Triebwerks (102) eines Luftfahrzeugs (10) mit einer hinteren Triebwerksbefestigung (250), wobei das Triebwerk (102) eine Längsrichtung (X) aufweist, wobei der Mast (106) eine Mittelebene (P) aufweist und einen unteren Träger (206) und zwei auf beiden Seiten der Mittelebene (P) angeordnete seitliche Platten (208) umfasst, wobei die hintere Triebwerksbefestigung (250) eine Sohle (249) umfasst, die durch zwei auf beiden Seiten der Mittelebene (P) angeordnete Beschläge (250ab) ausgebildet ist, wobei jeder Beschlag (250a-b) einen am unteren Träger (206) befestigten Schuh (252) umfasst und wobei die Anordnung ferner einen unteren Pleuel (259) umfasst, wobei die Anordnung **dadurch gekennzeichnet, dass** jeder Schuh (252) an einer der seitlichen Platten (208) befestigt ist, dass jeder Beschlag (250a-b) zwei Querschenkel (258a-b) umfasst, die parallel zur Längsrichtung (X) beabstandet sind, darunter ein vorderer Querschenkel (258a) und ein hinterer Querschenkel (258b), die fest mit dem Schuh (252) verbunden sind und sich senkrecht zur Längsrichtung (X) erstrecken, dass der vordere (258a) bzw. der hintere Querschenkel (258b) eines Beschlags (250a) am vorderen (258a) bzw. hinteren Querschenkel (258b) des anderen Beschlags (250b) anliegen, wobei jeder Querschenkel (258a-b) durch eine Bohrung (260) durchbrochen ist, wobei alle Achsen der Bohrungen (260) koaxial sind, wobei die beiden vorderen Querschenkel (258a) und die beiden hinteren Querschenkel (258b) somit einen weiblichen Gabelkopf ausbilden, und dass der untere Pleuel (259) gelenkig im weiblichen Gabelkopf und am Triebwerk (102) montiert ist.

2. Anordnung nach Anspruch 1, **dadurch gekennzeichnet, dass** der vordere (258a) bzw. der hintere Querschenkel (258b) eines Beschlags (250a) entlang der Längsachse (X) in Bezug auf den vorderen (258a) bzw. den hinteren Querschenkel (258b) des anderen Beschlags (250b) nach vorn versetzt ist.

3. Anordnung nach Anspruch 1, **dadurch gekennzeichnet, dass** der vordere Querschenkel (258a) und der hintere Querschenkel (258b) eines Beschlags (250a) zwischen dem vorderen Querschenkel (258a) und dem hinteren Querschenkel (258b) des anderen Beschlags (250b) angeordnet sind.

4. Anordnung nach einem der Ansprüche 1 bis 3, **dadurch gekennzeichnet, dass** jeder Schuh (252) die Form eines L-Profils annimmt, dessen eine Wand am unteren Träger (206) befestigt ist und dessen andere Wand an der seitlichen Platte (208) befestigt ist.

5. Anordnung nach einem der Ansprüche 1 bis 4, **dadurch gekennzeichnet, dass** sie einen Flügel (104) mit einer Struktur und einem hinteren Pleuel umfasst und dass der hintere Pleuel ein gelenkig an der Struktur des Flügels (104) montiertes erstes Ende und ein gelenkig an der hinteren Triebwerksbefestigung (250) montiertes zweites Ende umfasst.

6. Anordnung nach Anspruch 5, **dadurch gekennzeichnet, dass** jeder Beschlag (250a-b) eine Palette (262a-b) umfasst, die fest mit dem Schuh (252) verbunden und von einer Bohrung (264) durchbrochen, deren Achse senkrecht zur Mittelebene (P) verläuft, dass die beiden Paletten (262a-b) miteinander in ebenem Kontakt stehen, dass ihre Bohrungen (264) koaxial sind und dass die beiden Paletten (262a-b) zusammen einen männlichen Gabelkopf bilden, der in einen weiblichen Gabelkopf passt, der am zweiten Ende des hinteren Pleuels angeordnet ist, und wobei die beiden Gabelköpfe über eine Welle gelenkig montiert sind.

7. Luftfahrzeug (10) mit mindestens einer Anordnung nach einem der vorangehenden Ansprüche.

## Claims

1. Assembly of a pylon (106) and of an engine (102) of an aircraft (10) with a rear engine attachment (250), the engine (102) having a longitudinal direction (X), the pylon (106) having a median plane (P) and having a lower spar (206) and two lateral panels (208) disposed on either side of the median plane (P), the rear engine attachment (250) having a sole (249) formed by two fittings (250a-b) disposed on either side of the median plane (P), wherein each fitting (250a-b) has a shoe (252) fastened to the lower spar (206) and wherein the assembly also has a lower rod (259),
said assembly being **characterized in that** each shoe (252) is fastened to one of the lateral panels (208), **in that** each fitting (250a-b) comprises two transverse arms (258a-b) spaced apart parallel to the longitudinal direction (X), specifically a front transverse arm (258a) and a rear transverse arm (258b), which are as one with the shoe (252) and extend perpendicular to the longitudinal direction (X), **in that** the front transverse arm (258a), respectively rear transverse arm (258b), of one fitting (250a) bearing in planar fashion against the front transverse arm (258a), respectively rear transverse arm (258b), of the other fitting (250b), wherein each transverse arm (258a-b) is pierced with a bore (260), wherein all the axes of the bores (260) are coaxial, wherein the two front transverse arms (258a) and the two rear transverse arms (258b) thus form a female clevis, and **in that** the lower rod (259) is mounted articulated in the female clevis and on the engine (102) .

2. Assembly according to Claim 1, **characterized in that** the front transverse arm (258a), respectively rear transverse arm (258b), of one fitting (250a) is offset towards the front along the longitudinal axis (X) with respect to the front transverse arm (258a), respectively rear transverse arm (258b), of the other fitting (250b).

3. Assembly according to Claim 1, **characterized in that** the front transverse arm (258a) and the rear transverse arm (258b) of one fitting (250a) are disposed between the front transverse arm (258a) and the rear transverse arm (258b) of the other fitting (250b).

4. Assembly according to one of Claims 1 to 3, **characterized in that** each shoe (252) takes the form of an L-shaped profile of which one wall is fastened to the lower spar (206) and of which the other wall is fastened to the lateral panel (208).

5. Assembly according to one of Claims 1 to 4, **characterized in that** it has a wing (104) with a structure and a rear rod and **in that** the rear rod has a first end mounted articulated on the structure of the wing (104) and a second end mounted articulated on the rear engine attachment (250).

6. Assembly according to Claim 5, **characterized in that** each fitting (250a-b) has a blade (262a-b) as one with the shoe (252) and pierced with a bore (264) of which the axis is perpendicular to the median plane (P), **in that** the two blades (262a-b) are in planar contact with one another, **in that** their bores (264) are coaxial and **in that** the two blades (262a-b) together constitute a male clevis that is inserted into a female clevis arranged at the second end of the rear rod and wherein the two clevises are mounted articulated by way of a shaft.

7. Aircraft (10) having at least one assembly according to one of the preceding claims.
